# EUROPEAN PATENT SPECIFICATION

(11) **EP 2 591 071 B1**
(45) Date of publication and mention of the grant of the patent: **12.12.2018**
(21) Application number: 11741289.0
(22) Date of filing: 04.07.2011
(51) Int. Cl.: C10G 11/18, C10G 51/06, B01J 8/00, B01J 8/30, B01J 8/38, B01J 38/30

(54) **UPFLOW REGENERATION OF FCC CATALYST FOR MULTI STAGE CRACKING**
AUFSTROMREGENERATION EINES FCC-KATALYSATORS FÜR MEHRSTUFIGES CRACKEN
RÉGÉNÉRATION ASCENDANTE DE CATALYSEUR FCC POUR CRAQUAGE À PLUSIEURS ÉTAGES

(30) Priority: 08.07.2010 IN 747KO2010
(43) Date of publication of application: 15.05.2013
(73) Proprietor: Indian Oil Corporation Ltd., Kolkata 700 068 West Bengal (IN)
(72) Inventor: MUKTHIYAR, S., Faridabad 121 007 Haryana (IN); PRADEEP, P. R., Faridabad 121 007 Haryana (IN); BHATTACHARYYA, Debasis, Faridabad 121 007 Haryana (IN); SATHEESH, V., K., Faridabad 121 007 Haryana (IN); SAIDULU, G., Faridabad 121 007 Haryana (IN)
(74) Representative: Høiberg P/S
(86) International application number: PCT/IN2011/000441
(87) International publication number: WO 2012/004805

(56) References cited:
- US-A1- 2002 108 887
- US-A1- 2004 178 120
- US-B1- 6 267 873
- US-B1- 7 029 571
- US-B1- 7 220 351
- D. BAI ET AL: "Novel Designs and Simulations of FCC Riser Regeneration", INDUSTRIAL & ENGINEERING CHEMISTRY RESEARCH, vol. 36, no. 11, 1 November 1997 (1997-11-01), pages 4543-4548, XP55009907, ISSN: 0888-5885, DOI: 10.1021/ie970126d cited in the application

## Description

### FIELD OF THE INVENTION

The present invention relates to the area of Fluidized Catalytic Cracking (FCC) of heavy hydrocarbons into lighter fractions with a fluidized stream of catalyst. In particular, this invention relates to the improved process of regeneration of spent catalyst comprising varying level of coke from multiple fluidized bed catalytic cracking reactors resulting in reduced hydrothermal and metal deactivation of catalyst and also an apparatus thereof.

### BACKGROUND OF THE INVENTION

The present invention discloses an improved method thereof for regeneration of the spent FCC catalyst comprising varying level of coke from multiple fluidized bed catalytic cracking reactors in an upflow regenerator where hydrothermal and metal deactivation of the spent catalyst is reduced. The upflow regenerator is introduced here for improving combustion efficiency.

Heavier hydrocarbons can be converted to more valuable lighter products like Gasoline, Propylene, LPG and middle distillates using fluid catalytic cracking process. A fluid catalytic cracking process employs fine catalyst particles acting like fluid when fluidized with the hydrocarbon vapors in a reactor (upflow or downflow). The heavier hydrocarbons are cracked in presence of the catalyst to valuable lighter products like gasoline and propylene. During the course of reaction, the catalyst gets temporarily deactivated due to the deposition of coke. The coke is removed by burning it with air in the regenerator and thereby restoring its catalytic activity.

D.J. Rawlence and K. Gosling, 'Irreversible Deactivation of FCC catalysts', Catalysis Today 11 (1991**)** describes that the irreversible deactivation of the FCC catalyst occurs when the source of activity is destroyed by chemical or physical means during the operation cycle. An FCC catalyst particle spends over 95% of its life in the regeneration cycle and the exposure to high temperatures and steam, originating from the combustion of the carbon and hydrogen contents of coke and entrained hydrocarbons; it induces hydrothermal deactivation of the zeolite-Y component due to dealumination and structural degradation. A common FCC catalyst passes through an average of 10000 to 50000 cycles of regeneration in its lifecycle and the average residence time of a catalyst in the conventional regenerator per cycle ranges from 2 to 5 minutes. This longer residence time contributes to the thermal deactivation of the catalyst in the regenerator. To address the issue of catalyst deactivation and higher catalyst residence time in regenerators, new regeneration configurations including upflow type regenerator have been proposed for improving combustion efficiency.

D. Bai et al (Ind. Eng. Chem. Res. 1997, 36, 4543-4548**)** proposed two designs of FCC riser regenerator. The first design allows the air to be introduced at different stages in the riser regenerator to improve the operating flexibility, higher solids inventory and combustion efficiency with a mean catalyst residence time of 10-26 seconds. The second design consists of a two stage design, where, two riser regenerators are connected in series. In both designs, the catalyst enters the bottom of the riser regenerator and moves up along the riser along with combustion air.

US Patent No. 4448753 describes about the regeneration of FCC catalyst using a fast fluidized bed. It incorporates an internal riser for complete combustion of coke. US Patent No. 4514285 describes about the cracking process in a gravity flow reactor in which the spent catalyst is regenerated in riser regenerator. US Patent No. 4814068 proposes a multistage regeneration process consisting of two riser regenerators placed in series, in which each stage operates at successively higher temperature. This claims reducing hydrothermal deactivation due to the withdrawal of flue gases in each stage.

US Patent No. 5589139 describes about the downflow arrangement for the cracking reaction and upflow arrangement for two stage regeneration. This configuration also minimizes hydrothermal deactivation due to the withdrawal of flue gases in each stage. US Patent No. 7655589B2 discloses an improvement of regeneration by introducing different fluidization regimes in the regenerator with a high velocity central region and low velocity annular region.

Multiple reactor systems have started dominating the research area of Fluid catalytic cracking process due to its operational flexibility, maximization of specific product yield and wider scope in terms of feed quality, process conditions such as catalyst to oil ratio, reactor outlet temperature, etc. Multistage selective cracking of hydrocarbons have been covered well in the prior arts such as US Patent No. 3433733**,** US Patent No. 5009769**,** US Patent No. 5435906**,** US Patent No. 5565176**,** US Patent No. 5824208**,** US Patent No. 6287522B1**, US Publication No.** US2002010887A1**,** US Patent No. 6641715B1**,** US Patent No. 7029571B1**,** US Patent No. 7220351B1**,** US Publication No. 20080011645A1 **and** US Patent No. 7491315**.** However, utilization of multiple reactors under varying severity and with different feed is likely to produce spent catalyst with wide variation in coke content. If these spent catalysts are regenerated in a single regenerator, it results in an unwanted over exposure of spent catalyst of lower coke content leading to accelerated hydrothermal and metal deactivation. Installing independent regenerators for spent catalysts coming from different reactors is one of the solutions that can be employed, but with significant added cost of investment and operation of the regenerator vessel and accessories.

The configurations and designs mentioned in the prior art for the regeneration of spent catalyst does not address the issue of excessive hydrothermal and metal deactivation of the catalyst due to exposure of the spent catalyst generated with wide variation of coke content resulting from the reactors streams of multiple stage catalytic cracking.

### SUMMARY OF THE INVENTION

Accordingly, the present invention provides an improved process for regeneration of FCC spent catalysts of varying coke content from multiple fluidized bed catalytic cracking reactors employing upflow regenerator of multiple diameter zones. The spent catalyst containing the highest coke content is fed at the bottom of the upflow regenerator and the spent catalysts containing lesser coke content are fed at higher elevations than the feeding point of highest coke content spent catalyst. The elevation of feeding point of each spent catalyst to the upflow regenerator is so designed such that the residence time required for the spent catalyst to burn the coke to the desired level. This process of catalyst regeneration employing multiple feeding points gives way to avoidance of unwanted exposure of catalyst to regenerator conditions resulting in lesser hydrothermal and metal deactivation of catalyst, which would not have been possible using conventional single regenerator.

### DETAILED DESCRIPTION OF THE INVENTION

According to this invention, there is provided a process as defined in claim 1.

The process of present invention is unique where the residence time of the spent catalysts of different coke content in the regenerator are so adjusted to achieve the regenerated catalyst of targeted coke content with reduction in hydrothermal and metal deactivation of the catalyst.

The process includes the sequence of steps as follows. The apparatus as well as the process depicted below is solely for illustration purpose. A spent catalyst with the coke content in the range of 0.4-3 wt% is generated from a first FCC reactor source. The fluid catalytic cracking reactor source may be may be of any configuration used in the prior art including upflow, downflow, inclined flow, turbulent bed as well as dense bed reactors. It may however be noted that those skilled in the art will realize that other type of reactor systems for generating the spent catalyst may satisfy the requirement of the present invention without changing the teachings disclosed herein. The spent catalyst so generated from the first reactor has higher coke content due to higher severity, feed quality or a combination thereof and the same is referred to as 'first spent catalyst' hereinafter.

A spent catalyst with the coke content in the range of 0.3-2.9 wt% is generated from a second FCC reactor source. The catalytic cracking reactor source may be may be of any configuration used in the prior art including upflow, downflow, inclined flow, turbulent bed as well as dense bed reactors. It may however be noted that those skilled in the art will realize that other type of reactor systems for generating the spent catalyst may satisfy the requirement of the present invention without changing the teachings disclosed herein. The coke content of the spent catalyst generated in the second reactor source is referred to as 'second spent catalyst' hereinafter. The spent catalysts produced from the two reactors are stripped in individual strippers to remove the entrapped hydrocarbons in the spent catalysts.

The process of present invention for the regeneration of spent catalyst of different coke contents coming from different reactors utilizing a regenerator vessel consisting of different diameter zones, with the smallest diameter at the lower end and largest diameter at the upper end. The spent catalysts from the two reactors with difference in coke content by at least 0.1 wt% are fed to an upflow regenerator at two different elevations of regenerator having different diameter to achieve the required residence time to burn the coke to the targeted level using air or oxygen containing gases. The first spent catalyst is fed at the bottom of first diameter zone of the upflow regenerator to provide higher residence time to ensure the targeted burning of coke. The second spent catalyst is fed to the bottom of second diameter zone of the upflow regenerator having larger diameter than that of first diameter zone, at a point of higher elevation than first spent catalyst feeding point. The point of injection for the low coke contained catalyst is within 40-70% of the regenerator length from the bottom. A bed density of 5-70 kg/m³ is to be maintained in the upflow regenerator. The residence time of the spent catalyst in the small diameter zone in the upflow regenerator is in the range of 5-30 sec while in the bigger diameter zone in the range of 10-30 sec.

The catalytically cracked products from the first reactor and second reactor are separated in a common or separate fractionator to get the products comprising dry gas, LPG, gasoline, middle distillates and clarified oil.

The process has the capability to use any type of reactor including upflow, downflow, inclined flow, turbulent bed as well as dense bed reactors in any numbers under varying operation severity using cracking catalysts and additives depending on the feedstock and targeted product yield pattern. The upflow regenerator of the present invention comprises different diameter zones of varying lengths stacked vertically one over the other in the increasing order of diameter towards top and connected by truncated cone having vertical section of isotrapezia vertex angle varying from 25-70°. In the event of using the upflow regenerator with multiple reactors (more than two FCC reactors), catalyst of highest coke content is made to enter at the bottom of the smallest diameter zone located at the bottommost portion of the regenerator and the catalyst with the lowest coke content is made to enter at the bottom of the biggest diameter zone located at the topmost portion of the upflow regenerator.

The coke contents of spent catalyst from different sources may vary from 0.3-3 wt%. The difference in coke contents of the spent catalysts being injected in two consecutive zones of the upflow regenerator is at least 0.1 wt%. The superficial velocity of gas at all zones of the upflow regenerator is kept more than 2 m/sec. The spent catalysts injected at different zones of the upflow regenerator will be transported up along the length of the regenerator to finally reach the cyclone containing vessel at the top. The catalysts after regeneration are collected together at the top of the upflow regenerator in a cyclone containing vessel.

In a preferred embodiment, the diameters of two consecutive diameter zones in the upflow regenerator are in the ratio of 1.1-10.

In another preferred embodiment, air or oxygen containing gases are injected at different elevations as reaction and lift media along the length of the upflow regenerator to achieve the targeted coke level on the catalyst at the top of the regenerator terminated in a cyclone containing vessel.

In yet another preferred embodiment, excess oxygen in addition to air or oxygen containing gases in concentration increasing towards the top of the regenerator is injected at different elevations along the length of the upflow regenerator to achieve the operation of the regenerator with lower catalyst inventory.

In one another embodiment of this invention, the regenerator system may be operated in more than one fluidization regime without the use of additional structural elements like placing an internal vessel, vertical partition or a baffle.

### DESCRIPTION OF THE INVENTION WITH REFERENCE TO THE ACCOMPANYING DRAWING

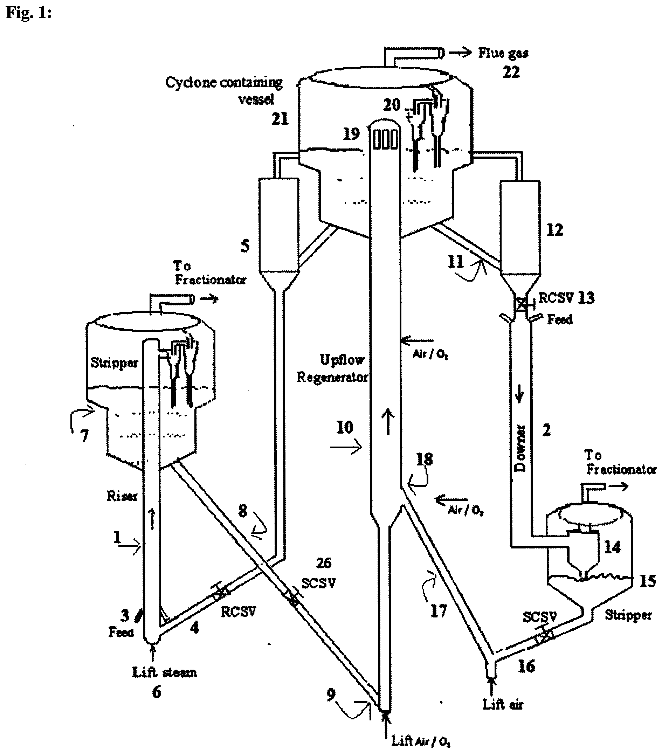

**FIG.1** shows a divided spent catalyst injection in upflow regenerator for the coupled downer riser reactor system. The apparatus as well as the process depicted in **FIG.1** is solely for illustration purpose. The process has the capability to use any type of reactor including upflow, downflow, inclined flow, turbulent bed as well as dense bed reactors under varying severity depending on the feedstock and targeted product yield pattern.

### Description of FIG.1

A system for improved regeneration of FCC catalyst for multistage catalytic cracking resulting in wide variation of coke content in spent catalyst is described in **FIG.1****.** The reactor system consists of a riser (1) and downer (2). A fresh hydrocarbon feed along with the recycle feed is injected near the bottom of the riser (1) through the feed injection system (3). The regenerated catalyst enters near the bottom of the riser reactor (1) through the standpipe (4) connected to a catalyst withdrawal well (5). The flow of regenerated catalyst in to the riser reactor is regulated by a regenerated catalyst slide valve (RCSV) positioned in the stand pipe (4). The regenerated catalyst and the hydrocarbon feed (fresh/recycle) are contacted in the riser reactor (1) and the hydrocarbons get cracked in to lighter products. A lift steam (6) is given at the bottom of the riser reactor, in order to assist the upward flow of catalyst in the riser. The cracked vapors and the spent catalyst are removed in the cyclones connected to the riser reactor (1). The entrapped hydrocarbons in the spent catalyst are stripped in the stripper (7) using steam. The separated hydrocarbons are then sent to a fractionator for further separation. The spent catalyst from the bottom of stripper enters at the first elevation (9) of the upflow regenerator (10) through a catalyst stand pipe (8) for targeted burning of coke deposited in the catalyst using air/oxygen contained gases supplied at the bottom of the upflow regenerator(10). The flow of spent catalyst in to the upflow regenerator (10) is regulated by a spent catalyst slide valve (26) (SCSV) positioned in the stand pipe (8). The regenerated catalyst enters the downer reactor (2) through a regenerated catalyst standpipe (11), connected to a catalyst withdrawal well (12) for the downer acting as a catalyst hopper (12). The flow of regenerated catalyst is controlled by the regenerated catalyst slide valve (13). The hydrocarbon feed is contacted with the regenerated catalyst and the mixture flows down through the downer reactor (2). At the end of the downer (2), the spent catalyst is separated from the hydrocarbon product vapors using a separating device like an internal cyclone (14). The separated catalyst is subjected to multistage steam stripping to remove the entrapped hydrocarbon vapors in the stripper (15). The hydrocarbon vapors are sent a fractionator for further separation. A stand pipe (16) attached to the stripper bottom carries the spent catalyst from the stripper to the bottom of the lift line (17). The spent catalyst is carried up the lift line (17) using the lift air supplied at the bottom of the lift line (17) and enters in to the upflow regenerator at the second elevation (18) for targeted burning of coke deposited on the catalyst. The flow of spent catalyst is regulated by the spent catalyst slide valve (SCSV) positioned in the stand pipe (16). The spent catalyst from the two reactors is regenerated in the upflow regenerator (10). The flue gases (22) and the regenerated catalyst are separated in the separation system (19) and cyclones (20) provided at the top of the upflow regenerator. The regenerated catalyst is collected in a cyclone containing vessel (21) positioned at the top of the upflow regenerator. The regenerated catalyst is fed to the downer and riser reactors via respective regenerated catalyst stand pipes (4 and 11) from the catalyst withdrawal wells (5 and 12).

## Claims

1. A process for improved regeneration of fluid catalytic cracking (FCC) spent catalysts of varying coke content from multiple FCC reactors employing upflow regenerator having at least a first diameter zone and a second diameter zone comprising of:
- feeding the first spent catalyst from a first FCC reactor at the bottom of the first diameter zone of the upflow regenerator, and
- feeding the second spent catalyst from a second FCC reactor in the second diameter zone, at a higher elevation than the feeding point of first spent catalyst in an upflow regenerator,
- separating a regenerated catalyst from the first diameter zone and the second diameter zone of the upflow regenerator from flue gases in a separation system and cyclones provided at the top of the upflow regenerator,
wherein the coke content of first spent catalyst is at least 0.1 wt% greater than the coke content of the second spent catalyst and the residence time of the first and second spent catalyst in the upflow regenerator is determined based on the respective coke content, and wherein hydrothermal and metal deactivation of the first spent catalyst and the second spent catalyst is minimized;
wherein a catalyst residence time is in the range of 5-30 seconds in the first diameter zone while the catalyst residence time in the second diameter zone is in the range of 10-30 seconds.
wherein a diameter of the first diameter zone is smaller than the diameter of the second diameter zone ; and
wherein an elevation of the first diameter zone is lower than an elevation of the second diameter zone.

2. The process as claimed in claim 1, wherein the coke content of the first spent catalyst varies in the range of 0.4-3 wt%.

3. The process as claimed in claim 1, wherein the coke content of the second spent catalyst varies in the range of 0.3-2.9 wt%.

4. The process as claimed in claim 1, wherein the superficial velocity of gas at all zones of the upflow regenerator is kept more than 2 m/sec.

5. The process as claimed in claim 1, wherein the upflow regenerator operates with more than two diameter zones corresponding to the number of feeding points of the spent catalyst with catalyst of highest coke content entering at the bottom of the smallest diameter zone located at the bottommost portion of the regenerator and the catalyst with the lowest coke content entering at the bottom of the biggest diameter zone located at the topmost portion of the regenerator.

6. The process as claimed in claim 1, wherein air or oxygen containing gases is injected at different elevations as reaction and lift media along the length of the upflow regenerator.

7. The process as claimed in claim 1, wherein the FCC reactors include upflow, downflow, inclined flow, turbulent bed as well as dense bed reactors in any numbers under varying operation severity using cracking catalysts and additives.

## Patentansprüche

1. Prozess zur verbesserten Regeneration von verbrauchten Katalysatoren für das fluidkatalytische Cracken (FCC) mit unterschiedlichem Koksgehalt aus mehreren FCC-Reaktoren unter Verwendung eines Aufstromregenerators mit mindestens einer ersten Durchmesserzone und einer zweiten Durchmesserzone, umfassend:
- Zuführen des ersten verbrauchten Katalysators aus einem ersten FCC-Reaktor am unteren Ende der ersten Durchmesserzone des Aufstromregenerators, und
- Zuführen des zweiten verbrauchten Katalysators aus einem zweiten FCC-Reaktor in der zweiten Durchmesserzone in einer höheren Erhebung als der Zuführpunkt des ersten verbrauchten Katalysators in einem Aufstromregenerator,
- Trennen eines regenerierten Katalysators von der ersten Durchmesserzone und der zweiten Durchmesserzone des Aufstromregenerators von Rauchgasen in einem Trennsystem und Zyklonen, die an der Oberseite des Aufstromregenerators vorgesehen sind,
wobei der Koksgehalt des ersten verbrauchten Katalysators mindestens 0,1 Gew.-% höher ist als der Koksgehalt des zweiten verbrauchten Katalysators und die Verweilzeit des ersten und zweiten verbrauchten Katalysators im Aufstromregenerator basierend auf dem jeweiligen Koksgehalt bestimmt wird, und wobei das hydrothermale und metallische Deaktivieren des ersten verbrauchten Katalysators und des zweiten verbrauchten Katalysators minimiert wird;
wobei eine Verweilzeit des Katalysators im Bereich von 5-30 Sekunden in der ersten Durchmesserzone liegt, während die Verweilzeit des Katalysators in der zweiten Durchmesserzone im Bereich von 10-30 Sekunden liegt,
wobei ein Durchmesser der ersten Durchmesserzone kleiner ist als der Durchmesser der zweiten Durchmesserzone; und
wobei eine Erhebung der ersten Durchmesserzone geringer ist als eine Erhebung der zweiten Durchmesserzone.

2. Verfahren nach Anspruch 1, wobei der Koksgehalt des ersten verbrauchten Katalysators im Bereich von 0,4 - 3 Gew.-% variiert.

3. Verfahren nach Anspruch 1, wobei der Koksgehalt des zweiten verbrauchten Katalysators im Bereich von 0,3 - 2,9 Gew.-% variiert.

4. Verfahren nach Anspruch 1, wobei die Oberflächengeschwindigkeit des Gases in allen Zonen des Aufstromregenerators mehr als 2 m/Sek. gehalten wird.

5. Verfahren nach Anspruch 1, wobei der Aufstromregenerator mit mehr als zwei Durchmesserzonen arbeitet, die der Anzahl der Zuführpunkte des verbrauchten Katalysators entsprechen, wobei ein Katalysator mit dem höchsten Koksgehalt am unteren Ende der kleinsten Durchmesserzone am untersten Abschnitt des Regenerators eintritt und der Katalysator mit dem niedrigsten Koksgehalt am unteren Ende der größten Durchmesserzone am obersten Abschnitt des Regenerators eintritt.

6. Verfahren nach Anspruch 1, wobei Luft oder sauerstoffhaltige Gase auf unterschiedlichen Niveaus als Reaktions- und Hebemedium entlang der Länge des Aufstromregenerators eingespritzt werden.

7. Verfahren nach Anspruch 1, wobei die FCC-Reaktoren Aufstrom-, Abstrom-, Schrägströmungs-, turbulente Schichtsowie Dichtheitsreaktoren in beliebiger Anzahl unter variierender Betriebsstärke unter Verwendung von Crack-Katalysatoren und Zusatzstoffen beinhalten.

## Revendications

1. Procédé de régénération améliorée de catalyseurs usés de craquage catalytique fluide (FCC) à teneur variable en coke provenant de multiples réacteurs FCC en employant un régénérateur à courant ascendant ayant au moins une première zone de diamètre et une deuxième zone de diamètre comprenant :
- l'introduction du premier catalyseur usé provenant d'un premier réacteur FCC par le bas de la première zone de diamètre du régénérateur à courant ascendant, et
- l'introduction du deuxième catalyseur usé provenant d'un deuxième réacteur FCC dans la deuxième zone de diamètre, à une hauteur plus élevée que le point d'introduction du premier catalyseur usé dans un régénérateur à courant ascendant,
- la séparation d'un catalyseur régénéré provenant de la première zone de diamètre et de la deuxième zone de diamètre du régénérateur à courant ascendant à partir de gaz de combustion dans un système de séparation et de cyclones fournis au sommet du régénérateur à courant ascendant,
dans lequel la teneur en coke du premier catalyseur usé est au moins de 0,1 % en poids supérieure à la teneur en coke du deuxième catalyseur usé et le temps de présence des premier et deuxième catalyseurs usés dans le régénérateur à courant ascendant est déterminé sur la base de la teneur en coke respective, et dans lequel une désactivation hydrothermique et métallique du premier catalyseur usé et du deuxième catalyseur usé est minimisée ;
dans lequel un temps de présence d'un catalyseur est situé dans la plage allant de 5 à 30 secondes dans la première zone de diamètre tandis que le temps de présence d'un catalyseur dans la deuxième zone de diamètre est situé dans la plage allant de 10 à 30 secondes,
dans lequel un diamètre de la première zone de diamètre est inférieur au diamètre de la deuxième zone de diamètre ; et dans lequel une hauteur de la première zone de diamètre est plus basse qu'une hauteur de la deuxième zone de diamètre.

2. Procédé selon la revendication 1, dans lequel la teneur en coke du premier catalyseur usé varie dans la plage allant de 0,4 à 3 % en poids.

3. Procédé selon la revendication 1, dans lequel la teneur en coke du deuxième catalyseur usé varie dans la plage allant de 0,3 à 2,9 % en poids.

4. Procédé selon la revendication 1, dans lequel la vitesse superficielle d'un gaz dans toutes les zones du régénérateur à courant ascendant est maintenue au-dessus de 2 m/sec.

5. Procédé selon la revendication 1, dans lequel le régénérateur à courant ascendant fonctionne avec plus de deux zones de diamètre correspondant au nombre de points d'introduction du catalyseur usé, un catalyseur présentant une teneur en coke la plus élevée entrant par le bas de la zone de diamètre la plus petite située dans la partie la plus basse du régénérateur et le catalyseur présentant la teneur en coke la plus basse entrant par le bas de la zone de diamètre la plus grande située dans la partie la plus haute du régénérateur.

6. Procédé selon la revendication 1, dans lequel des gaz contenant de l'air ou de l'oxygène sont injectés à différentes hauteurs en tant que milieux réactionnels et d'élévation le long de la longueur du régénérateur à courant ascendant.

7. Procédé selon la revendication 1, dans lequel les réacteurs FCC incluent des réacteurs à courant ascendant, à courant descendant, à courant incliné, à lit agité ainsi qu'à lit dense en n'importe quel nombre sous une sévérité de fonctionnement variable utilisant des catalyseurs et additifs de craquage.
